# EUROPÄISCHE PATENTSCHRIFT

(11) **EP 4 133 116 B1**
(45) Veröffentlichungstag und Bekanntmachung des Hinweises auf die Patenterteilung: **06.05.2026**
(21) Anmeldenummer: 21716962.2
(22) Anmeldetag: 22.03.2021
(51) Int. Cl.: C22C 30/02, B23K 35/02, B23K 35/30, C22C 19/05, B23K 9/04, B23K 9/18, C22C 30/00

(54) **VERWENDUNG EINER NICKEL-CHROM-EISEN-LEGIERUNG**
USE OF A NICKEL-CHROMIUM-IRON ALLOY
UTILISATION D'UN ALLIAGE NICKEL-CHROME-FER

(30) Priorität: 06.04.2020 DE 102020109510; 18.03.2021 DE 102021106624
(43) Veröffentlichungstag der Anmeldung: 15.02.2023
(73) Patentinhaber: VDM Metals International GmbH, 58791 Werdohl (DE)
(72) Erfinder: WOLF, Martin, 44267 Dortmund (DE); ALVES, Helena, 44388 Dortmund (DE); BEHRENS, Rainer, 58644 Iserlohn (DE)
(86) Internationale Anmeldenummer: PCT/DE2021/100280
(87) Internationale Veröffentlichungsnummer: WO 2021/204326

(56) Entgegenhaltungen:
- EP-A1- 3 499 172
- WO-A2-2008/081407
- WO-A2-2012/059080

## Beschreibung

Die Erfindung betrifft die Verwendung einer stickstofflegierten Nickel-Chrom-EisenLegierung für eine neue Anwendung im Bereich thermischer Verwertung.

Die EP 2 632 628 A1 offenbart eine knetbare homogene austenitische Nickellegierung mit einer hohen Korrosionsbeständigkeit gegenüber aggressiven flüssigen Medien, sowohl unter oxidierenden als auch reduzierenden Bedingungen und einer ausgezeichneten Beständigkeit gegenüber Lokalkorrosion in sauren, chloridhaltigen Medien. Die Legierung besteht aus (Masse-%) Chrom 26,0 - 28,0%, Molybdän 6,0 - 7,0%, Eisen max. 33,5%, Mangan 1,0 - 4,0%, Silizium max. 0,1%, Bor 0,001 - 0,004%, Kupfer 0,5 - 1,5%, Aluminium 0,01 - 0,3%, Magnesium 0,001 - 0,15%, Kohlenstoff max. 0,01%, Stickstoff 0,1 - 0,25%, Nickel 33,5 - 35%, seltenen Erden > 0 bis 1,0% und weiteren erschmelzungsbedingten Verunreinigungen. Die Legierung eignet sich als Werkstoff für Bauteile, die gegenüber chemischem Angriff beständig sein müssen.

Als Plattierwerkstoffe für das Auftragsschweißen oder das Flammspritzen in der Anwendung für die thermische Verwertung wie zum Beispiel in Müllverbrennungsanlagen, Ersatzstoffbrennanlagen oder Biomasseanlagen werden z. Zt. meist Nickellegierungen wie zum Beispiel FM 625 (UNS N06625), FM 622 (UNS N06022) sowie FM 686 (UNS N06686) eingesetzt.

Korrosionsbeanspruchungen in Bauteilen und mit Rauchgas berührte Flächen von thermischen Verwertungsanlagen sind vielfältig und komplex. So treten diverse diffusionsgesteuerte Hochtemperaturkorrosionsarten, wie zum Beispiel Korrosion durch Halogene mit Chlor und zunehmend Brom, durch Sulfidierung, durch Aufkohlung, durch aufgeschmolzene Salze oder Korrosion durch niedrigschmelzende flüssige Metalle, auf. Darüber hinaus können die eingesetzten Werkstoffe in Stillstands- und Wartungszeiten bei Taupunktunterschreitungen oder Abreinigungsarbeiten zusätzlich durch Nasskorrosionsmechanismen stark beansprucht werden. Eine weitere Werkstoffbeanspruchung entsteht durch die thermische Wechsellast beim An- und Abfahren der Anlage oder durch lokale und temporäre "Flammsträhnen" im Brennraum.

Trotz des Korrosionsschutzes von Wärmetauscherrohren, Heizflächen sowie Rauchgas berührte Flächen und andere Bauteile durch Plattieren mit diesen bekannten Werkstoffen, treten je nach eingesetztem Werkstoff und Betriebsbedingungen Abzehrungen an den Überhitzerrohren und anderen thermisch beanspruchten Bauteilen auf, die den Betreiber zu Stillständen und kostenintensiven Wartungsarbeiten und eventuell erforderlichen Neubau zwingen.

Der in EP 2 632 628 A1 beschriebene Werkstoff wird bislang ausschließlich im Nasskorrosionsbereich eingesetzt, in welchem elektrochemische Reaktionen in Verbindung mit Elektrolyten den Korrosionsangriff hervorrufen. Bekannte Anwendungsgebiete sind: Chemische Prozesse mit Phosphorsäure, Schwefelsäure, Meer- und Brackwasseranwendungen oder Beizanlagen mit Salpeter-Flusssäure.

Durch die DE 10 2007 062 810 A1 ist eine Anlage zur Erzeugung von Energie aus Biomasse bekannt geworden. Teile dieser Anlage können aus hitzebeständigen und korrosionsfesten Materialien, bevorzugt aus Edelstahl, bestehen. Angegeben werden Edelstähle mit höheren Chrom- und Molybdängehalten. Die dort angegebenen Werkstoffe eignen sich jedoch nicht für das Auftragschweißen, da diese relativ niedrig legierten Werkstoffe insbesondere in Verbindung mit der beim Auftragschweißen auftretenden Eisenaufmischung im Schweißgut verstärkt Restdeltaferrit im Gefüge bilden, welches die Verwendung sowohl unter Nass- als auch unter Hochtemperaturkorrosionsbedingungen generell stark einschränkt.

Der WO 2012/059080 A2 ist eine Nickel-Eisen-Chrom-Molybdän-Legierung zu entnehmen, die folgende Zusammensetzung (in Masse-%) aufweist: Ni 33 - 35 %, Cr 26 - 28 %, Mo 6 - 7 %, Cu 0,5 - 1,5 %, Mn 1,0 - 4 %, Si max. 0,1 %, Al 0,01 - 0,3 %, C max. 0,01 %, N 0,1 - 0,25 %, B 0,001 - 0,004 %, SE > 0 - 1 %, Fe Rest einschließlich unvermeidbarer Verunreinigungen. Dieser Werkstoff ist als sogenannter nasskorrosiver Werkstoff anzusehen.

Die EP 3 499 172 A1 beschreibt einen Überhitzer, enthaltend eine Verbrennungsabgasen ausgesetzte Rohranordnung, wobei die Verbrennungsgase insbesondere aus dem Verbrennungsbrennstoffen ausgewählt, aus der Gruppe bestehend aus Hausmüllindustrie, Abfällen, Biomasse und Klärschlamm stammen. Der Überhitzer soll aus einer Nickelbasislegierung oder einem Sonderedelstahl folgender Zusammensetzung (in Gew.-%) bestehen: mindestens 18 %, vorzugsweise 20 - 32 % Cr, 6 - 20 % Mo, 0,5 - 40 % Fe, Rest Ni, wobei Bestandteile von insgesamt < 10 % an Al, Nb, W, Mn, Si, Ti, Co, Cu, C, N und Spurenelementen enthalten sein können.

Der WO 2008/081407 A2 ist ein aus Biomasse hergestellter Werk- und/oder Brennstoff zu entnehmen. Der Werk- und/oder Brennstoff kann nach einem Verfahren hergestellt werden, bei dem die Biomasse bei einer Temperatur von über 100°C und einem Druck von über 5 bar für eine Behandlungsdauer von mindestens einer Stunde behandelt wird.

Ziel der Erfindung ist es, die gemäß Stand der Technik nur für niedrige Temperaturen bis max. 450 °C zugelassene Legierung einem neuen Anwendungsbereich zuzuführen.

Dieses Ziel wird erreicht durch die Verwendung einer Legierung der Zusammensetzung (in Masse-%)

| | |
|---|---|
| Ni | 33,5 - 35,0% |
| Cr | 26,0 - 28,0% |
| Mo | 6,0 - 7,0% |
| Fe | < 33,5% |
| Mn | 1,0 - 4,0% |
| Si | ≤ 0,1% |
| Cu | 0,5 - 1,5% |
| Al | 0,01% - 0,3% |
| C | ≤ 0,01% |
| P | ≤ 0,015% |
| S | ≤ 0,01% |
| N | 0,1 - 0,25% |
| B | 0,001 - 0,004% |
| SE | > 0 - 1,0% |

| bedarfsweise | |
|---|---|
| W | ≤0,2% |
| Co | ≤0,5% |
| Nb | ≤ 0,2% |
| Ti | ≤ 0,1%, |

sowie erschmelzungsbedingte Verunreinigungen,
als Schweiß-Plattierwerkstoff im Bereich von Wärmetauscherrohren von thermischen Verwertungsanlagen, insbesondere Müll, Biomasse, Klärschlamm und Ersatzbrennstoffanlagen, wobei der Schweiß-Plattierwerkstoff nach dem Auftragsschweißen im betriebsbeanspruchten Zustand in einer vollaustenitischen Gefügematrix gezielt Sigma-Phase und andere harte Partikel im Schweißgutgefüge bildet

Die Sigmaphasenbildung ruft eine Dispersion harter Partikel im Schweißgutgefüge hervor, was zu einem Härteanstieg des Schweißgutgefüges führt, wodurch eine unerwartet hohe Resistenz gegenüber dem erosionsbedingten Abtrag schützender Deckschichten erreicht wird. Durch die Bildung der Sigmaphase wird somit im betriebsbeanspruchten Zustand ein überproportionaler Anstieg der Widerstandsfähigkeit von einer solchen Auftragschweißung in thermischen Verwertungsanlagen erreicht. Ein weiterer Beitrag gegen Erosion bzw. erosionsunterstützter Korrosion ist durch die Bildung von Chromkarbiden bei der Anwendungstemperatur anzunehmen. Das Schweißgut erhält somit erst im betriebsbeanspruchten Zustand durch die Ausscheidung intermetallischer Phasen wie der Sigma-Phase einen außergewöhnlich hohen Widerstand gegen mechanische Reib-Beanspruchung und somit auch gegen Staub- und Partikel-Erosion.

Es ist auch bei sehr langen Einsatzzeiten von über 10.000 h zu erwarten, dass unter den wechselnden Bedingungen einer thermischen Verwertungsanlage, wo nicht nur die rein diffusionsgesteuerte/elektrochemische Korrosion eine Rolle spielt, sondern insbesondere auch die Kombination mit dem Widerstand eines Werkstoffes gegen mechanische Beanspruchung, z.B. durch Streu- und Rauchpartikel (Erosion bzw. Erosionskorrosion), dieser Werkstoff über ein neuartiges Eigenschaftsprofil verfügt.

Zudem ist die bei eisenhaltigen Werkstoffen eigentlich stattfindende Eisen(II)Chlorid- oder Eisen(III)Chlorid-Bildung insbesondere bei niedrigen Sauerstoffpartialdrücken mit einhergehender Werkstoff-Auflösung stark unterdrückt.

In verschiedenen Labor Untersuchungen und Schweißungen unter Produktionsbedingungen wurde nachgewiesen, dass dieser Werkstoff bezogen auf das Verfahren der Schweißplattierung über eine ausgezeichnete Schweißbarkeit - hohe Risssicherheit und gutes Benetzungsvermögen - sowohl für das Wolfram Inert Gas Schweißen (WIG) als auch Metall Schutzgas Schweißverfahren (MSG) verfügt. Das Aufbringen der Schweiß-Plattierschichten kann außer durch Auftragschweißen auch zum Beispiel durch Flamm- oder Plasmaspritzen mittels Pulver oder Draht erfolgen. Vorteilhafterweise wird die Legierung mit dem Schweiß-, Flamm- bzw. Plasmaspritzverfahren als Plattierwerkstoff im Bereich von Anlagen zur thermischen Verwertung von zum Beispiel Müll-, Biomasse-, Klärschlamm-, Ersatzstoffbrennanlagen eingesetzt.

Im Nass-Korrosionstest ASTM G 48C liegt die kritische Lochfraßtemperatur für den Grund-Werkstoff im Auslieferungszustand typischerweise bei größer gleich 85°C. Die Beständigkeit gegen Lochfraßkorrosion ist durch die Bildung von Sigmaphase herabgesetzt, dennoch ist die Legierung so hoch legiert, dass die in der austenitischen Matrix vorhandenen Chromgehalte für eine Passivität sorgen.

Vorteilhafte Weiterbildungen des Erfindungsgegenstandes sind den Unteransprüchen zu entnehmen.

Die Legierung ist insbesondere für das Beschichten von Stählen über die Flüssigphase wie zum Beispiel Schweißen oder Flammspritzen einsetzbar, welche eine hohe Korrosionsbeständigkeit gegenüber aggressiven Medien aufweist, die bei der thermischen Verwertung entstehen können.

Bevorzugte chemische Zusammensetzungen (in Masse-%) werden nachstehend angeführt:

| | |
|---|---|
| Ni | 33,5 - 35,0% |
| Cr | 26,0 - 28,0% |
| Mo | 6,0 - 7,0% |
| Fe | < 33,5% |
| Mn | 1,8 - 3,0% |
| Si | ≤ 0,1% |
| Cu | 1,0 - 1,5% |
| Al | 0,05% - 0,3% |
| C | ≤ 0,01% |
| P | ≤ 0,015% |
| S | ≤ 0,01% |
| N | 0,2 - 0,25% |
| B | 0,001 - 0,004% |
| SE | 0,020 - 0,060% |

| bedarfsweise | |
|---|---|
| W | ≤0,2% |
| Co | ≤0,5% |
| Nb | ≤ 0,1% |
| Ti | ≤ 0,5%, |

sowie erschmelzungsbedingte Verunreinigungen.

Bei Untersuchungen des o.g. Werkstoffes in Form von Auftragschweißungen auf 16Mo3 Rohren wurde überraschenderweise und unvorhersehbar festgestellt, dass dieser auch im Temperaturbereich und unter den spezifischen Bedingungen der thermischen Verwertung vorteilhaft zu verwenden ist.

Anhand eines Beispiels wird die Erfindung nachfolgend näher erläutert:

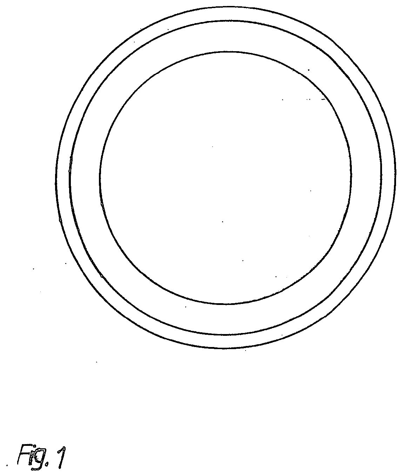

Figur 1 zeigt ein reales Wärmetauscherrohr im Querschnitt, das in einer Müllverbrennungsanlage als Dampferzeugerrohr typischerweise eingesetzt werden kann. Das Innen-Rohr besteht aus dem 16Mo3 C-Stahl und weist eine Materialdicke von 5 mm und einen Durchmesser von 38 mm auf. Mittels des Metall Aktiv Gas Lichtbogen-Schweißprozesses (MSG) wurde unter Rotation des C-Stahl-Rohres und einer angepassten Lateralbewegung des Schweißbrenners der Auftragsschweißwerkstoff FM 31plus mit einer Schichtdicke von 2,0 - 2,4 mm einlagig aufgebracht, wodurch eine äußere Schicht Auftragschweißgut und ein metallurgischer Verbund zwischen C-Stahl Rohr und Schweißgut entstand. Es wurden zur Herstellung der Auftragschweißung folgende Schweißparameter verwendet: Schweißstrom (gepulst) mit <I> = 108 A, Schweißspannung U = 26 V, Überlappung = 50%. Als Schutzgas wurde ein Vier-Komponenten Gas mit Argon, Helium, Wasserstoff und Kohlendioxid verwendet. Der Drahtdurchmesser des FM 31plus betrug 1,0 mm aus der Charge 118903.

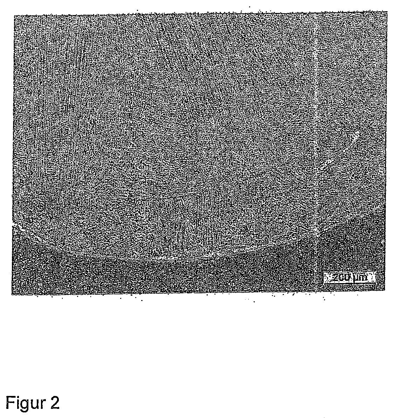

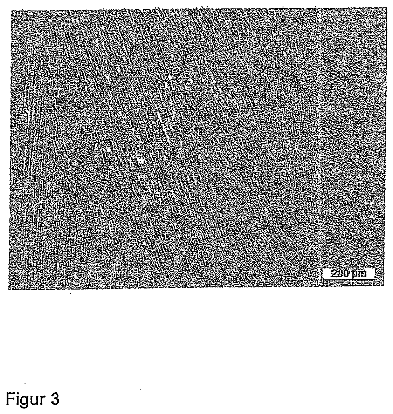

Figur 2 und Figur 3 zeigen metallografische Querschliffe dieser Auftragschweißung, wobei Figur 2 den Übergang vom C-Stahl in das FM 31plus Schweißgut darstellt und
Figur 3 das reine, feindendritisch-erstarrte vollaustenitische Schweißgut aus FM 31plus zeigt.

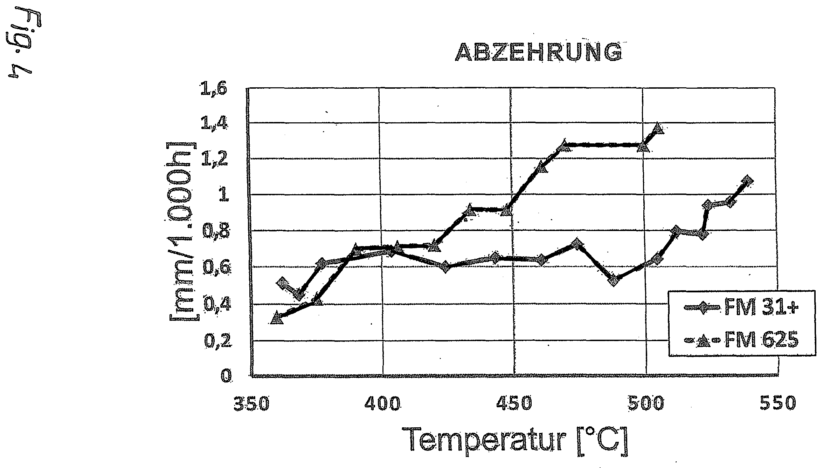

Figur 4 zeigt einen Vergleich der gemessenen Abzehrungen nach einem Auslagerungsversuch von schweißplattierten Wärmetauscherrohren, geschweißt mit FM 625 und FM 31plus, nach 1000 h unter realen Kesselraumbedingungen einer Müllverbrennungsanlage unter Aufrechterhaltung eines über die gesamte Auslagerungszeit definierten Temperaturgradienten zwischen 360 °C und 540 °C Dampftemperatur an der Rohrinnenwand. Die für die Plattierung relevante Temperaturbelastung an der Rohraußenseite ist deutlich höher und liegt im Wesentlichen oberhalb von 450 °C. Es stellte sich in den durchgeführten Untersuchungen unerwartet heraus, dass die Auftragschweißung aus FM 31 plus der Auftragschweißung aus FM 625 bezüglich der festgestellten Abzehrung grundsätzlich ebenbürtig und über einen weiten Temperaturbereich sogar deutlich überlegen ist, obwohl der sonst unter chlorierenden Bedingungen als besonders schädliche Eisengehalt beim FM 31plus um mindestens 28,5 Masse-% höher liegt als beim FM 625.

In Tabelle 1 sind die Zusammensetzungen einerseits des erfindungsgemäßen Auftragsschweißwerkstoffes sowie bisher zum Einsatz gelangender alternativer Werkstoffe angeführt.

**Tabelle 1**

| **Werkstoff** | **FM 31plus** | **FM 625** | **FM 622** |
|---|---|---|---|
| ***Chg. Nr.*** | ***118903*)*** | ***115949*** | ***122001*** |
| C | 0,003 | 0,015 | 0,005 |
| S | 0,002 | 0,002 | 0,004 |
| N | 0,22 | 0,018 | 0,016 |
| Cr | 26,6 | 22,3 | 21,4 |
| Ni | 34,0 | 64,3 (Rest) | 59,2 (Rest) |
| Mn | 1,94 | 0,01 | 0,16 |
| Cu | 1,24 | 0,01 | 0,01 |
| Si | 0,02 | 0,07 | 0,03 |
| Mo | 6,47 | 9,21 | 13,7 |
| Fe | 29,13 | 0,20 | 2,2 |
| Al | 0,07 | 0,06 | 0,11 |
| B | 0,0024 | <0,001 | 0,001 |
| V | 0,03 | <0,01 | 0,17 |
| W | 0,10 | 0,02 | 2,87 |
| sE | 0,04 | | |

| | | | |
|---|---|---|---|
| * Erschmelzungsbedingte Verunreinigungen: Co, P, Nb, Ti | | | |

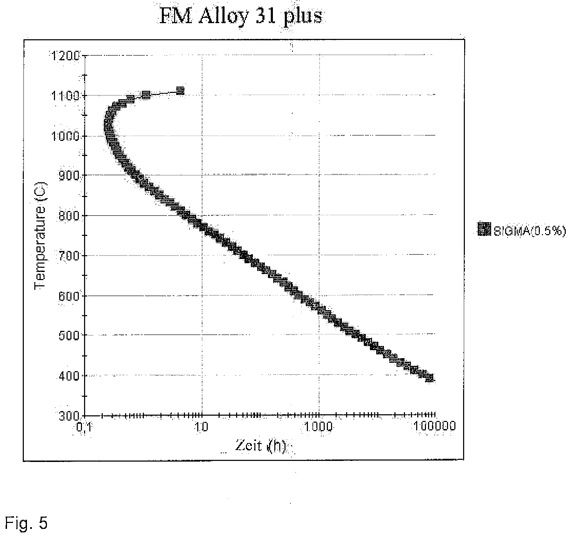

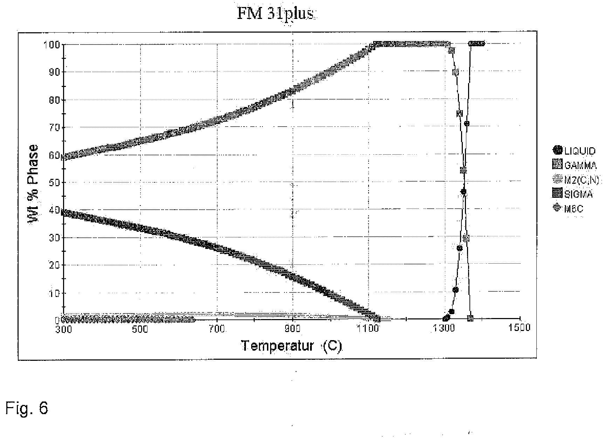

Der Werkstoff FM 31plus als Schweiß-Plattierwerkstoff für Bauteile in thermischen Verwertungsanlagen zeichnet sich gegenüber den Vergleichswerkstoffen durch die autogene Entstehung eigenschaftsverbessernder Gefüge-Phasen im Bereich der Betriebstemperaturen aus. Berechnungen mit der Calphad Software J-MatPro in Figur 5 und Figur 6 beschreiben, dass dieser Effekt unter anderem durch die Bildung von intermetallischen Phasen hervorgerufen wird, wie zum Beispiel der Sigma-Phase. Dies lässt sich auch durch metallografische Untersuchungen belegen.

## Patentansprüche

1. Verwendung einer Legierung der Zusammensetzung in Masse-%
| | |
|---|---|
| Ni | 33,5 - 35,0% |
| Cr | 26,0 - 28,0% |
| Mo | 6,0 - 7,0% |
| Fe | < 33,5% |
| Mn | 1,0 - 4,0% |
| Si | ≤ 0,1% |
| Cu | 0,5 - 1,5% |
| Al | 0,01% - 0,3% |
| C | ≤ 0,01% |
| P | ≤ 0,015% |
| S | ≤ 0,01% |
| N | 0,1 - 0,25% |
| B | 0,001 - 0,004% |
| SE | > 0 - 1,0% |
| bedarfsweise | |
|---|---|
| W | ≤0,2% |
| Co | ≤0,5% |
| Nb | ≤ 0,2% |
| Ti | ≤ 0,1%, |
sowie erschmelzungsbedingte Verunreinigungen,
als Schweiß-Plattierwerkstoff im Bereich von Wärmetauscherrohren von thermischen Verwertungsanlagen, insbesondere Müll, Biomasse, Klärschlamm und Ersatzbrennstoffanlagen, wobei der Schweiß-Plattierwerkstoff nach dem Auftragsschweißen im betriebsbeanspruchten Zustand in einer vollaustenitischen Gefügematrix gezielt Sigma-Phase und andere harte Partikel im Schweißgutgefüge bildet.

2. Verwendung nach Anspruch 1 mit folgender Zusammensetzung in Masse-%:
| | |
|---|---|
| Ni | 33,5 - 35,0% |
| Cr | 26,0 - 28,0% |
| Mo | 6,0 - 7,0% |
| Fe | < 33,5% |
| Mn | 1,8 - 3,0% |
| Si | ≤ 0,1% |
| Cu | 1,0 - 1,5% |
| Al | 0,05% - 0,3% |
| C | ≤ 0,01% |
| P | ≤ 0,015% |
| S | ≤ 0,01% |
| N | 0,2 - 0,25% |
| B | 0,001 - 0,004% |
| SE | 0,020 - 0,060% |
| bedarfsweise | |
| W | ≤0,2% |
| Co | ≤0,5% |
| Nb | ≤ 0,1% |
| Ti | ≤ 0,5%, |
sowie erschmelzungsbedingte Verunreinigungen.

3. Verwendung nach Anspruch 1 oder 2, **dadurch gekennzeichnet, dass** der Schweiß-Plattierwerkstoff auch bei einer schweißbedingten Aufmischung mit Eisen aufgrund des Nickelgehalts von min. 33,5% im Schweißgut vollaustenitisch bleibt und kein delta-Ferrit bildet.

4. Verwendung nach einem der Ansprüche 1 bis 3, wobei der Schweiß-Plattierwerkstoff für Reparaturen eingesetzt wird,

5. Verwendung nach einem der Ansprüche 1 bis 4, **dadurch gekennzeichnet, dass** der Schweiß-Plattierwerkstoff in Form eines Drahts vorliegt.

6. Verwendung nach einem der Ansprüche 1 bis 4, **dadurch gekennzeichnet, dass** der Schweiß-Plattierwerkstoff in Form eines Schweißbandes für das Unterpulver- bzw. Elektroschlackeschweißen vorliegt.

7. Verwendung nach einem der Ansprüche 1 bis 4, **dadurch gekennzeichnet, dass** der Schweiß-Plattierwerkstoff in Pulverform vorliegt.

## Claims

1. Use of an alloy having the following composition in % by mass:
| | |
|---|---|
| Ni | 33.5-35.0 % |
| Cr | 26.0-28.0 % |
| Mo | 6.0-7.0 % |
| Fe | < 33.5 % |
| Mn | 1.0-4.0 % |
| Si | ≤ 0.1 % |
| Cu | 0.5-1.5% |
| Al | 0.01 %-0.3 % |
| C | ≤ 0.01 % |
| P | ≤ 0.015 % |
| S | ≤ 0.01 % |
| N | 0.1-0.25 % |
| B | 0.001-0.004 % |
| REE | > 0-1.0 % |
| as needed | |
|---|---|
| W | ≤ 0.2 % |
| Co | ≤ 0.5 % |
| Nb | ≤ 0.2 % |
| Ti | ≤ 0.1 %; |
and melting-related impurities
as a clad-welding material in the field of heat exchanger pipes of thermal recycling plants, in particular waste, biomass, wastewater sludge and substitute fuel facilities, wherein after buildup welding the clad-welding material forms sigma phase and other hard particles in targeted manner in the structure of the weld material in a full austenitic structural matrix in the operationally stressed state.

2. Use according to Claim 1 having the following composition in % by mass:
| | |
|---|---|
| Ni | 33.5-35.0 % |
| Cr | 26.0-28.0 % |
| Mo | 6.0-7.0 % |
| Fe | < 33.5 % |
| Mn | 1.8-3.0% |
| Si | ≤ 0.1 % |
| Cu | 1.0-1.5 % |
| Al | 0.05 %-0.3 % |
| C | ≤ 0.01 % |
| P | ≤ 0.015 % |
| S | ≤ 0.01 % |
| N | 0.2-0.25 % |
| B | 0.001-0.004 % |
| REE | 0-020-0.060 % |
| as needed | |
|---|---|
| W | ≤ 0.2 % |
| Co | ≤ 0.5 % |
| Nb | ≤ 0.1 % |
| Ti | ≤ 0.5 % |
and melting-related impurities.

3. Use according to Claim 1 or 2, **characterized in that** the clad-welding material remains fully austenitic and does not form delta ferrite even during welding-induced blending with iron due to the nickel content of at least 33.5 % in the welding material.

4. Use according to any one of Claims 1 to 3, wherein the clad-welding material is used for repairs.

5. Use according to any one of Claims 1 to 4, **characterized in that** the clad-welding material is in the form of a wire.

6. Use according to any one of Claims 1 to 4, **characterized in that** the clad-welding material is in the form of a welding strip for submerged arc welding or electroslag welding.

7. Use according to any one of Claims 1 to 4, **characterized in that** the clad-welding material is in powder form.

## Revendications

1. Utilisation d'un alliage de la composition, en %/ masse :
| | |
|---|---|
| Ni | 33,5 - 35,0 % |
| Cr | 26,0 - 28,0 % |
| Mo | 6,0 - 7,0 % |
| Fe | < 33,5 % |
| Mn | 1,0 - 4,0 % |
| Si | ≤ 0,1 % |
| Cu | 0,5 - 1,5 % |
| Al | 0,01 % - 0,3 % |
| C | ≤ 0,01 % |
| P | ≤ 0,015 % |
| S | ≤ 0,01 % |
| N | 0,1 - 0,25 % |
| B | 0,001 - 0,004 % |
| SE | > 0 - 1,0 % |
| en cas de besoin | |
|---|---|
| W | ≤ 0,2 % |
| Co | ≤ 0,5 % |
| Nb | ≤ 0,2 % |
| Ti | ≤ 0,1 % |
et impuretés causées par la fusion,
en tant que matériau de placage par soudage dans la zone des tubes d'échangeur de chaleur d' installations de recyclage thermiques, en particulier ordures, biomasse, boues résiduaires et installations de combustibles alternatifs, sachant que le matériau de placage par soudage forme précisément une phase Sigma et d'autres particules dures dans la structure du métal déposé après le soudage par rechargement dans l'état nécessaire au fonctionnement dans une matrice structurale entièrement austénitique.

2. Utilisation selon la revendication 1, avec la composition suivante en %/masse :
| | |
|---|---|
| Ni | 33,5 - 35,0 % |
| Cr | 26,0 - 28,0 % |
| Mo | 6,0 - 7,0 % |
| Fe | < 33,5 % |
| Mn | 1,8 - 3,0 % |
| Si | ≤ 0,1 % |
| Cu | 1,0 - 1,5 % |
| Al | 0,05 % - 0,3 % |
| C | ≤ 0,01 % |
| P | ≤ 0,015 % |
| S | ≤ 0,01 % |
| N | 0,2 - 0,25 % |
| B | 0,001 - 0,004 % |
| SE | 0,020 - 0,060 % |
| en cas de besoin | |
| W | ≤ 0,2 % |
| Co | ≤ 0,5 % |
| Nb | ≤ 0,1 % |
| Ti | ≤ 0,5 % |
et impuretés causées par la fusion.

3. Utilisation selon la revendication 1 ou 2, **caractérisée en ce que** le matériau de placage par soudage reste entièrement austénitique dans le métal déposé et ne forme aucune ferrite Delta même lors de la dilution conditionnée par le soudage avec du fer en raison de la teneur en nickel d'au moins 33,5 %.

4. Utilisation selon l'une quelconque des revendications 1 à 3, sachant que le matériau de placage par soudage est utilisé pour des réparations.

5. Utilisation selon l'une quelconque des revendications 1 à 4, **caractérisé en ce que** le matériau de placage par soudage est présent sous la forme d'un fil.

6. Utilisation selon l'une quelconque des revendications 1 à 4, **caractérisé en ce que** le matériau de placage par soudage est présent sous la forme d'une bande de soudure pour le soudage à l'arc sous flux en poudre ou soudage électrique sous laitier.

7. Utilisation selon l'une quelconque des revendications 1 à 4, **caractérisé en ce que** le matériau de placage par soudage est présent sous la forme pulvérulente.
